# EUROPÄISCHE PATENTSCHRIFT

(11) **EP 2 578 608 B1**
(45) Veröffentlichungstag und Bekanntmachung des Hinweises auf die Patenterteilung: **26.02.2014**
(21) Anmeldenummer: 11183683.9
(22) Anmeldetag: 03.10.2011
(51) Int. Cl.: C08F 30/02, C04B 24/24, C08F 2/38

(54) **Dispergiermittel für Feststoffsuspensionen**
Dispersing agent for solid matter suspensions
Agent dispersant pour suspensions de matière solide

(43) Veröffentlichungstag der Anmeldung: 10.04.2013
(73) Patentinhaber: Sika Technology AG, 6340 Baar (CH)
(72) Erfinder: Sulser, Ueli, 8103 Unterengstringen (CH); Frunz, Lukas, 8057 Zürich (CH); Zimmermann, Jörg, 8400 Winterthur (CH)
(74) Vertreter: Sika Patent Attorneys

(56) Entgegenhaltungen:
- EP-A1- 2 006 258
- EP-A1- 2 154 118
- EP-A1- 2 410 009
- WO-A1-2009/056553

## Beschreibung

### Technisches Gebiet

Die Erfindung betrifft das Gebiet der Dispergiermittel für Feststoffsuspensionen.

### Stand der Technik

Auf dem Gebiet der Bindemittelverflüssiger und Dispergiermittel für Feststoffsuspensionen stellt sich die Aufgabe, verbesserte Zusatzmittel zu finden, welche eine gute dispergierende Wirkung für die Feststoffsuspensionen ergeben.

Weiter wünschenswert ist auch die Aufrechterhaltung der Wirksamkeit der Zusatzmittel auch bei längerer Lagerung, insbesondere in ihrer wässrigen Form.

Vorteilhaft ist auch eine gute dispergierende und verflüssigende Wirkung für die Feststoffsuspensionen, was, insbesondere wenn es sich bei der Feststoffsuspension um ein mineralisches Bindemittel handelt, eine optimale und praxisgerechte Regelung des Verarbeitungszeitraumes ermöglicht.

### Darstellung der Erfindung

Es war daher Aufgabe der vorliegenden Erfindung, Dispergiermittel zur Verfügung zu stellen, welche die erwähnten Anforderungen erfüllen.

Überraschenderweise wurde nun gefunden, dass eine Verwendung eines Polymers der Formel (XIV) als Dispergiermittel für pulverförmige Substanzen gemäss Anspruch 1 diese Aufgabe löst.

Die Verwendung des erfindungsgemässen Polymers der Formel (XIV) als Dispergiermittel führt im Vergleich zu bekannten Zusatzmitteln zu einer deutlich höheren Dispergierleistung.

Ein weiterer entscheidender Vorteil der Verwendung der Polymere der Formel (XI\/) als Dispergiermittel für pulverförmige Substanzen liegt darin, dass sie ihre hohe Dispergierleistung auch dann nicht verlieren, wenn sie über längere Zeit, insbesondere in Form ihrer wässrigen Zubereitungen, gelagert werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft die Verwendung eines Polymers der Formel (XIV) als Dispergiermittel für pulverförmige Substanzen 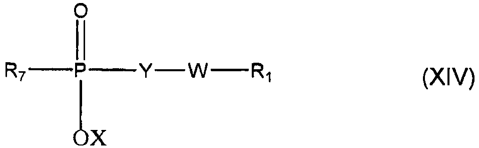 wobei X für H⁺, Alkalimetallion, Erdalkalimetallion, zwei- oder dreiwertiges Metallion, Ammoniumion, organische Ammoniumgruppe oder einen organischen Rest mit einem Molekulargewicht von ≤ 200 g/mol steht, insbesondere steht **X** für Na⁺ oder **K⁺**.

Hierbei steht **Y** für eine der Formeln (II) bis (VI) 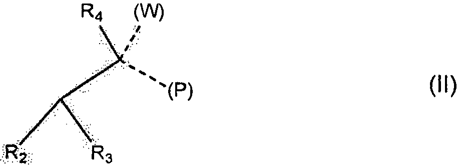 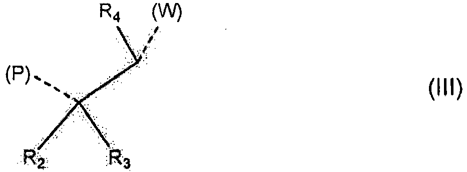 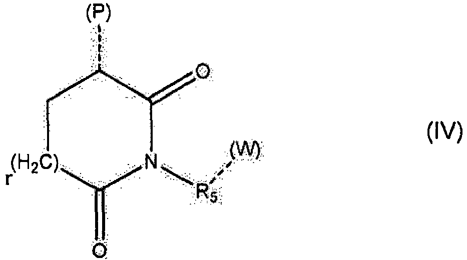 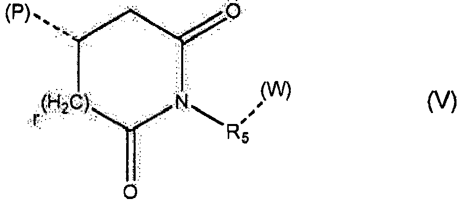 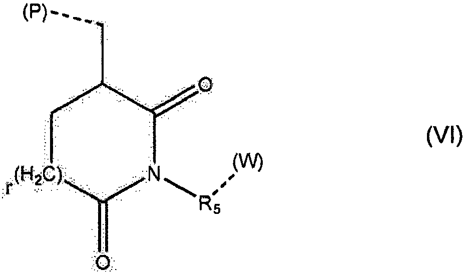 und **W** steht für eine der Formeln (VII) bis (X) 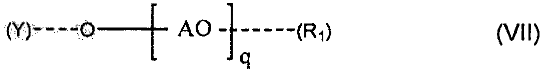 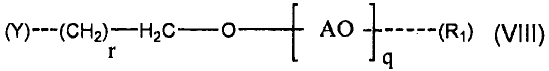 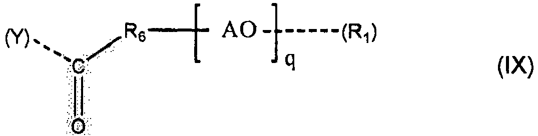 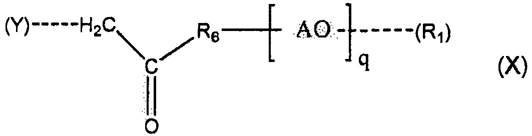 R₁ steht für H, eine Alkylgruppe, vorzugsweise mit 1-20 Kohlenstoffatomen, eine Alkylarylgruppe, vorzugsweise mit 7 - 20 Kohlenstoffatomen, oder die Formel (XI) 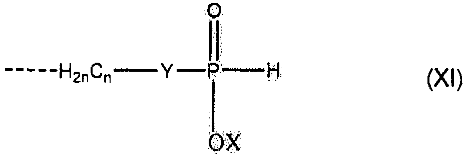
wobei der Substituent A unabhängig voneinander für eine C₂- bis C₄-Alkylengruppe, der Index q einen Wert von 2 bis 300, insbesondere von 2 bis 50, besonders bevorzugt von 3 bis 10, darstellt, der Index n einen Wert von 2 bis 4, vorzugsweise einen Wert von 2, darstellt, der Index r einen Wert von 0 bis 1 darstellt,
wobei R₂, R₃ und R₄ unabhängig voneinander für H, CH₃, COOH oder CH₂-COOH stehen. Es ist dem Fachmann klar, dass in diesem Zusammenhang unter COOH oder CH₂-COOH auch deren Salze mit Alkalimetallionen, Erdalkalimetallionen, zwei- oder dreiwertigen Metallionen oder Ammoniumionen, wie beispielsweise COO-Na⁺ oder CH₂-COO-Na⁺, verstanden werden.
R₅ steht für -CH₂-CH₂- oder -CH₂-CH(CH₃)- und
R₆ steht für O oder N.
R₇ steht für ein Polymer umfassend mindestens ein Monomer **M** in polymerisierten Zustand, wobei R₇ ein Molekulargewicht von 500-200'000 g/mol, vorzugsweise 2'000-50'000 g/mol aufweist.

Das Monomer **M** ist ausgewählt aus der Gruppe bestehend aus:
- monoethylenisch ungesättigten (C₃-C₆)-Mono- und Dicarbonsäuren, sowie deren C1 - C20-Alkylester und (Methyl-)Poly(oxyalkylen)ester, deren Amide, Nitrile und Anhydride,
- (C₁-C₂₀)-(Meth-)Alkylacrylaten, (C₁-C₂₀)-(Meth-)Alkylacrylamiden, (C₁-C₂₀)-(Meth-)Alkylacrylnitrilen und (Methyl-)Poly(oxyalkylen)(meth )acrylaten,
- Vinylestern von bis zu 20 C-Atome enthaltenden Carbonsäuren, Vinylaromaten mit bis zu 20C-Atomen,
- Vinylethern und Allylethern von 1 bis 12 C-Atomen enthaltenden Alkoholen, (Methyl-)Poly(oxyalkylen)-allylethern, (Methyl-)Poly(oxyalkylen)vinylethern,
- aliphatischen Kohlenwasserstoffen mit 2 bis 10 C-Atomen und 1 oder 2 olefinischen Doppelbindungen, cyclischen und offenkettigen N-Vinylamiden,
- und Mischungen dieser Monomeren.

Vorzugsweise besteht R₇ zu einen Anteil von ≥ 80 Gew.-%, insbesondere ≥ 90 Gew.-%, insbesondere bevorzugt ≥ 95 Gew.-% aus Monomeren **M** in ihrem polymerisierten Zustand, bezogen auf das Molekulargewicht von R₇.

Unter Monomeren **M** in ihrem polymerisierten Zustand werden Monomeren **M** verstanden, welche nach einer radikalischen Polymerisationsreaktion in Form eines Polymers vorliegen.

Polymere der Formel (XIV) können beispielsweise hergestellt werden durch radikalische Polymerisation von Monomeren **M** unter Verwendung einer monosubstituierten Phosphinsäure der Formel (I) 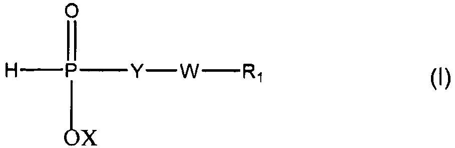 als Molekulargewichtsregler, wobei **X**, **Y**, **W**, **R₁** für Reste stehen, wie sie vorgehend beschrieben sind.

Unter dem Begriff "Molekulargewichtsregler" wird im vorliegenden Dokument eine Verbindung mit hohen Übertragungskonstanten verstanden, die bei radikalischen Polymerisationen eingesetzt werden. Molekulargewichtsregler beschleunigen Kettenabbruchreaktionen und bewirken damit eine Herabsetzung des Polymerisationsgrades der resultierenden Polymeren, ohne die Bruttoreaktions-Geschwindigkeit zu beeinflussen.

Vorzugsweise steht [AO] für die Formel (XV)

[(EO)ₓ-(PO)_{y}-(BuO)_{z}] (XV)

Die Indices x, y, z stellen hierbei unabhängig voneinander je die Werte 0 - 300 und deren Summe x+y+z ist 2 - 300. Weiterhin bedeutet in Formel (XV) EO=Ethylenoxy, PO=Propylenoxy, BuO=Butylenoxy oder Isobutylenoxy. Die Abfolge der einzelnen Struktureinheiten EO-, PO-, BuO kann alternierend, statistisch, blockweise oder zufällig sein.

Vorzugsweise ist der Indices x von 2 bis 50, besonders bevorzugt von 3 bis 15 und die Summe y+z = 0.

Unter "Molekulargewicht" oder "Molgewicht" versteht man im Sinne der Erfindung das mittlere Molekulargewichtsmittel Mw.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können.

Die fett markierten Bezeichnungen wie **X**, **W**, **Y**, **Y'**, **P**, **M** und dergleichen im vorliegenden Dokument dienen lediglich für das bessere Leseverständnis und Identifizierung.

Handelt es sich bei **X** um eine organische Ammoniumgruppe, so handelt es sich vorzugsweise um ein aliphatisches Amin oder ein hydroxyaliphatisches Amin, insbesondere ein Mono-, Di- oder Trialkylamin wie beispielsweise Methyl-, Ethyl-, oder Diethylamin, oder ein Mono-, Di- oder Tri-(hydroxyalkyl)-amin wie beispielsweise Ethanolamin, Di- oder Triethanolamin, Tris-(hydroxymethyl)methylamin oder N-(Hydroxyethyl)-N,N-di-ethylaminen.

Handelt es sich bei **X** um einen organischen Rest mit einem Molekulargewicht von ≤ 200 g/mol, so handelt es sich vorzugsweise um eine C₁- bis C₂₀-Alkylgruppe oder einen Rest enthaltend Alkylenoxid, mit einem Molekulargewicht von ≤ 200 g/mol.

Bevorzugt handelt es sich bei der Verbindung der Formel (I) 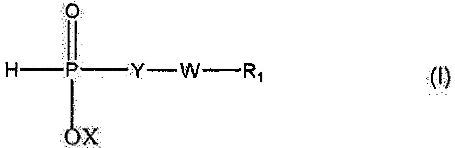
um eine Verbindung mit
   **X** = **H**⁺ oder **Na**⁺
   einem **W** der Formel (VII)
   einem **Y** der Formel (III),
   R₁ = H oder CH₃
   R₂ = R₃ = R₄ = H
   wobei die Indices x = 14-15 und y = z = 0 sind.
   oder
um eine Verbindung mit
   **X** = H⁺ oder Na⁺
   einem **W** der Formel (VII)
   einem **Y** der Formel (III),
   R₁ = H oder CH₃
   R₂=R₃ R₄ = H
   wobei die Indices x = 13-14 und y = 0 und z = 1 sind.
   oder
um eine Verbindung mit
   **X** = H⁺ oder Na⁺
   einem **W** der Formel (VIII)
   einem **Y** der Formel (III),
   R₁ = H oder CH₃
   R₂ = R₃ = R₄ = H
   wobei die Indices x = 2-8 und y = z = 0 sind.
   oder
um eine Verbindung mit
   **X** = H⁺ oder Na⁺
   einem **W** der Formel (VIII)
   einem **Y** der Formel (III),
   R₁ = H oder CH₃
   R₂ = R₃ = R₄ = H
   wobei die Indices x = 3-10 und y = z = 0 sind.
   oder
um eine Verbindung mit
   **X** = H⁺ oder Na⁺
   einem **W** der Formel (VIII)
   einem **Y** der Formel (III),
   R₁ = H oder CH₃
   R₂ = R₃ = R₄ = H
   wobei die Indices x = 9-11 und y = z = 0 sind.
   oder
um eine Verbindung mit
   **X** = H⁺ oder Na⁺
   einem **W** der Formel (VIII)
   einem **Y** der Formel (III)
   R₁ = H oder CH₃
   R₂= R₃= R₄ = H
   wobei die Summe der Indices x+y = 20 ist und z = 0 ist.
   oder
um eine Verbindung mit
   **X** = H⁺ oder Na⁺
   einem **W** der Formel (IX)
   einem **Y** der Formel (III),
   R₁ = H oder CH₃
   R₂ = H, R₃ = H oder CH₃, R₄ = COOH oder COO⁻ Na⁺,
   wobei die Indices x = 2-8 und y = z = 0 sind.

Besonders bevorzugt handelt es sich bei der Verbindung der Formel (I) 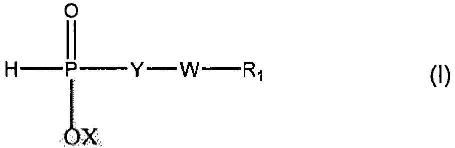 um eine Verbindung ausgewählt aus der Gruppe bestehend aus:
Natrium[poly(oxyethylen)]-phosphinat, vorzugsweise mit einem Molekulargewicht von 400-600 g/mol, Natrium-2-[poly(oxyethylen)-1,4-dioxybutylen]ethylphosphinat, vorzugsweise mit einem Molekulargewicht von 400-600 g/mol, Natrium-3-[methyl-poly(oxyethylen)-oxy-]propylphosphinat (Alkoxylierungsgrad: 2-8 EO), vorzugsweise mit einem Molekulargewicht von 250-500 g/mol, Natrium-3-[methyl-poly(oxyethylen)-oxy-]propylphosphinat (Alkoxylierungsgrad: 3-10 EO), vorzugsweise mit einem Molekulargewicht von 300-550 g/mol, Natrium-3-[methyl-poly(oxyethylen)-oxy-]propylphosphinat (Alkoxylierungsgrad: ca. 10 EO), vorzugsweise mit einem Molekulargewicht von 500-600 g/mol, Natrium-3-[methyl-poly(oxyethylen)-oxy-]propylphosphinat (Alkoxylierungsgrad: ca. 24 EO), vorzugsweise mit einem Molekulargewicht von 1100-1200 g/mol, Natrium-3-[methyl-poly(oxyethylenoxypropylen)-oxy-]propylphosphinat (Alkoxylierungsgrad: ca. 20 EO und ca. 20 PO), vorzugsweise mit einem Molekulargewicht von 1500-2200 g/mol.

Es ist auch möglich, neben einer vorgehend genannten monosubstituierten Phosphinsäure weitere herkömmliche Molekulargewichtsregler, beispielsweise organische Thiole, einzusetzen.

Die erfindungsgemässen Molekulargewichtsregler können zeitgleich mit anderen Reaktionskomponenten, aber auch zu unterschiedlichen Zeiten zugesetzt werden. Die Zugabe der Molekulargewichtsregler erfolgt vorzugsweise kontinuierlich im Verlauf der Polymerisationsreaktion oder durch Vorlage im Reaktor.

Die Monomere **M** sind ausgewählt aus der Gruppe bestehend aus:
- monoethylenisch ungesättigten (C₃-C₆)-Mono- und Dicarbonsäuren, sowie deren C1 - C20-Alkylester und (Methyl-)Poly(oxyalkylen)ester, deren Amide, Nitrile und Anhydride,
- (C₁-C₂₀)-(Meth-)Alkylacrylaten, (C₁-C₂₀)-(Meth-)Alkylacrylamiden, (C₁-C₂₀)-(Meth-)Alkylacrylnitrilen und (Methyl-)Poly(oxyalkylen)(meth-)acrylaten,
- Vinylestern von bis zu 20 C-Atome enthaltenden Carbonsäuren, Vinylaromaten mit bis zu 20 C-Atomen,
- Vinylethern und Allylethern von 1-12 C-Atome enthaltenden Alkoholen, (Methyl-)Poly(oxyalkylen)-allylethern, (Methyl-)Poly(oxyalkylen)-vinylethern,
- aliphatischen Kohlenwasserstoffen mit 2 - 10 C-Atomen und 1 oder 2 olefinischen Doppelbindungen, cyclischen und offenkettigen N-Vinylamiden,
- und Mischungen dieser Monomeren.

Bevorzugte monoethylenisch ungesättigte (C₃-C₆)-Mono- und Dicarbonsäuren sind beispielsweise Acrylsäure, Methacrylsäure, Vinylessigsäure, Crotonsäure, Fumarsäure, Maleinsäure, Itaconsäure sowie deren C1 - C20-Alkylester und (Methyl-)Poly(oxyalkylen)ester, deren Amide, Nitrile und Anhydride.

Als Beispiele seien die Folgenden genannt: Acrylsäuremethylester, Acrylsäureethylester, Methacrylsäuremethylester, Methacrylsäureethylester, 2-Ethylhexylacrylat, 2-Ethylhexylmethacrylat,Methyl-poly(oxyethylen)acrylat, Methyl-poly(oxypropylen)acrylat, Methyl-poly(oxyethylenoxypropylen)acrylat, Methyl-poly(oxyethylen)methaycrylat, Methyl-poly(oxypropylen)methycrylat, Methyl-poly(oxyethylenoxypropylen)methacrylat,Maleinsäureanhydrid, Itaconsäureanhydrid, Maleinsäuremonomethylester, Maleinsäuredimethylester, Maleinsäuremonoethylester, Maleinsäurediethylester,Mono-[methyl-poly-(oxyethylen)]maleat, Mono-[methyl-poly(oxypropylen)]maleat, Mono-[methylpoly(oxyethylenoxypropylen)]maleat, Di-[methyl-poly(oxyethylen] maleat, Di-[methyl-poly(oxypropylen]maleat, Di-[methyl-poly(oxyethylenoxypropylen] maleat, Alkylenglykolacrylate und-methacrylate, Alkylen-glykolmaleate und - itaconate, Acrylamid, Methycrylamid, N,N-Dimethylacrylamid, und Dialkylaminoalkylacrylamide und -methaycrylamide.

Als (C₁-C₂₀)-(Meth-)Alkylacrylaten, (C₁-C₂₀)-(Meth-)Alkylacrylamiden, (C₁-C₂₀)-(Meth-)Alkylacrylnitrilen und (Methyl-)Poly(oxyalkylen)(meth-)acrylaten sind bevorzugt:
(C₁-C₁₀)-Hydroxyalkylacrylate und -methacrylate wie Hydroxyethylacrylat, Hydroxypropylacrylat, Hydroxybutylacrylat, Hydroxyethylmethacrylat, Hydroxypropylmethycrylat, Hydroxyisobutmethacrylat
Bevorzugte Vinylmonomere sind z.B. Vinylacetat, Vinylpropionat, Vinyllaurat, Vinylstearat, Versaticsäurevinylester und N-Vinylpyrrolidon.
Bevorzugte vinylaromatische Verbindungen sind o- und p-Methylstyroi, Vinyltoluol und besonders bevorzugt Styrol.
Als bevorzugte Vinylether zu nennen sind beispielsweise Methylvinylether, Ethylvinylether, Butylvinylether, 4-Hydroxybutylvinylether, Isopropylvinylether, Propylvinylether, Vinylisobutylether und Dodecylvinylether.
Als besonders bevorzugte Vinylmonomere zu nennen sind die Vinylether der Methyl-polyalkylenglykole wie z.B. Methyl-poly(oxyethylen)-vinylether (Alkoxylierungsgrad: 2-24 EO), Methyl-poly(oxypropylen)vinylether (Alkoxylierungsgrad: 2-20 EO) und Methyl-poly(oxyethylenoxypropylen)-vinylether mit variablem EO:PO-Verhältnis.

Es können aber auch offenkettige N-Vinylamidverbindungen wie z.B. N-Vinylformamid, N-Vinyl-N-methylformamid, N-Vinylacetamid, N-Vinyl-N-methylacetamid eingesetzt werden.

Weitere bevorzugte Monomere sind beispielsweise (C1 - C10)-Alkylallylether und ganz besonders bevorzugt sind die Poly(oxyalkylen)allylether und die Methyl-poly(oxyalkylen)allylether die unterschiedliche Alkoxylierungsgrade aufweisen können Als Beispiele genannt sind Poly(oxyethylen)allylether, Poly(oxypropylen)allylether, Poly(oxyethylenoxypropylen)allylether mit variablem EO:PO-Verhältnis, Methylpoly(oxyethylen)allylether, Methyl-poly(oxypropylen)allylether und Methylpoly(oxyethylenoxypropylen)allylether mit variablem EO:PO-Verhältnis.

Als aliphatische Kohlenwasserstoffe mit 2 - 8 C-Atomen und einer oder zwei olefinischen Doppelbindungen seien beispielhaft Ethylen, Propylen, 1-Buten, Isobuten, und Isopren genannt.

Darüber hinaus sind alle weiteren ethylenisch ungesättigten Monomeren möglich, deren Polymerisation nach einem radikalisch initiierten Mechanismus verläuft.

Insbesondere bevorzugt sind die Monomere **M** ausgewählt aus der Gruppe bestehend aus:
- monoethylenisch ungesättigten (C₃-C₆)-Mono- und Dicarbonsäuren, sowie deren C1 - C20-Alkylester und (Methyl-)Poly(oxyalkylen)ester, deren Amide, Nitrile und Anhydride,
- (C₁-C₂₀)-(Meth-)Alkylacrylaten, (C₁-C₂₀)-(Meth-)Alkylacrylamiden, (C₁-C₂₀)-(Meth-)Alkylacrylnitrilen und (Methyl-)Poly(oxyalkylen)(meth-)acrylaten,
- Vinylestern von bis zu 20 C-Atome enthaltenden Carbonsäuren, Vinylaromaten mit bis zu 20 C-Atomen,
- Vinylethern und Allylethern von 1 - 12 C-Atome enthaltenden Alkoholen, (Methyl-)Poly-(oxyalkylen)-allylethern, (Methyl-)Poly(oxyalkylen)-vinylethern.

Am meisten bevorzugt sind die Monomere **M** monoethylenisch ungesättigte (C₃-C₆)-Mono- und Dicarbonsäuren, insbesondere Acrylsäure, Methacrylsäure und Maleinsäure, sowie deren C1 - C20-Alkylester und (Methyl-)Poly(oxyalkylen)ester.

Weiter bevorzugt sind als Monomere **M** Mischungen der folgenden Monomerklassen:
- monoethylenisch ungesättigten (C₃-C₆)-Mono- und Dicarbonsäuren, sowie deren C1 - C20-Alkylester und (Methyl-)Poly(oxyalkylen)ester, deren Amide, Nitrile und Anhydride,
- (C₁-C₂₀)-(Meth-)Alkylacrylaten, (C₁-C₂₀)-(Meth-)Alkylacrylamiden, (C₁-C₂₀)-(Meth-)Alkylacrylnitrilen und (Methyl-)Poly(oxyalkylen)(meth-)acrylaten,
- Vinylethern und Allylethern von 1-12 C-Atome enthaltenden Alkoholen, (Methyl-)Poly(oxyalkylen)-allylethern, (Methyl-)Poly(oxyalkylen)-vinylethern.

Weiter bevorzugt sind als Monomere **M** Mischungen der folgenden Monomerklassen:
- monoethylenisch ungesättigten (C₃-C₆)-Mono- und Dicarbonsäuren, sowie deren C1 - C20-Alkylester und (Methyl-)Poly(oxyalkylen)ester, deren Amide, Nitrile und Anhydride,
- Vinylestern von bis zu 20 C-Atome enthaltenden Carbonsäuren, Vinylaromaten mit bis zu 20 C-Atomen,
- Vinylethern und Allylethern von 1-12 C-Atome enthaltenden Alkoholen, (Methyl-)Poly(oxyalkylen)-allylethern, (Methyl-)Poly(oxyalkylen)-vinylethern.

Vorzugsweise wird die radikalische Polymerisation in Emulsion, in Masse oder in Lösung, bevorzugt in Lösung, insbesondere bevorzugt in Wasser, ausgeführt.

Die radikalische Polymerisation kann in der dem Fachmann bekannten Weise durchgeführt werden, typischerweise in einem Polymerisationsreaktor, der mit einem Rührer, mehreren Zulaufgefässen und -Leitungen, Rückflusskühler, Heiz- und Kühlvorrichtungen versehen ist und für das Arbeiten unter Inertgasatmosphäre und bei Über- oder Unterdruck geeignet ist.

Es ist weiter vorteilhaft, wenn die radikalische Polymerisation einen Radikalinitiator aufweist, welcher ausgewählt ist aus der Gruppe bestehend aus:
Peroxodisulfate wie Natrium-, Kalium- oder Ammoniumperoxodisulfat;
2,2'-Azobis-isobutyronitril;
und Redoxsysteme auf Basis von Hydroperoxiden wie Wasserstoffperoxid, t-Butylhydroperoxid, Cumolhydroperoxid die für sich oder zusammen mit Redoxinitiatoren wie beispielsweise Natriumbisulfit, Natriumsulfit, Ascorbinsäure, Isoascorbinsäure und Natrium formaldehyd-sulfoxylat angewendet werden.

Unter dem Begriff "Radikalinitiator" wird im vorliegenden Dokument eine Verbindung verstanden, wie sie beschrieben ist als Initiator in CD Römpp Chemie Lexikon, 9. Auflage, Version 1.0, Georg Thieme Verlag, Stuttgart 1995, welche sich für radikalische Polymerisationen eignen.

Die Polymerisationstemperaturen hängen von der Zerfallskonstanten ab und liegen normalerweise im Bereich von 50 - 120°C, vorzugsweise 60 - 80 °C, besonders bevorzugt 80 - 100 °C.

Vorzugsweise beträgt das Mol-%-Verhältnis der monosubstituierten Phosphinsäure oder deren Salz zu in der radikalischen Polymerisation eingesetzten Monomere **M** 0.1 - 20, vorzugsweise 1 - 5, bezogen auf die in der radikalische Polymerisation eingesetzten Gesamtmolmenge der monosubstituierte Phosphinsäure und Monomere **M**.

Vorzugsweise wird der Radikalinitiator im Verhältnis 0.001 bis 10 Gew.-%, bevorzugt 0.05 bis 5 Gew.-%, insbesondere bevorzugt im Verhältnis von 0.1 bis 2 Gew.-%, bezogen auf das Gesamtgewicht der Monomeren **M** eingesetzt

Es können auch ein kleiner Teil, etwa 5 - 10 Gew.-% der gesamten Molekulargewichtsreglermenge, zusammen mit einem kleinen Gewichtsteil, etwa 5 bis 10 Gew.-% der gesamten Radikalinitiatormenge, im Reaktor vorgelegt und dann die Reaktionskomponenten über separate Zuläufe gleichzeitig zugegeben werden, d.h. die Molekulargewichtsreglerzugabe erfolgt parallel zur Monomerzugabe, wobei die Dosierungen so eingestellt werden, dass bevorzugt die Hauptmenge des Molekulargewichtsreglers im gleichen Zeitraum zugegeben wird, in dem auch die Monomere zugeführt werden.

In weiteren bevorzugten Ausführungsformen erfolgt die Dosierung des Molekulargewichtsreglers über Fahrweisen, in denen die Molekulargewichtsreglerzugabe früher als der Monomerzulauf startet.

Die pulverförmige Substanz ist vorzugsweise ausgewählt aus der Gruppe bestehend aus Tonen, Porzellanschlicker, Silikatmehl, Kreide, Russ, Gesteinsmehl, Pigmenten, Talkum, Kunststoffpulvern und mineralischen Bindemitteln.

Vorzugsweise handelt es sich bei der pulverförmigen Substanz um eine Feststoffsuspension, insbesondere eine wässrige Aufschlämmungen ebensolcher

Vorzugsweise handelt es sich bei der pulverförmigen Substanz um ein mineralisches Bindemittel.

Bei den mineralischen Bindemitteln handelt es sich um hydraulische Bindemittel und/oder latent hydraulische Bindemittel und/oder puzzolanische Bindemittel. Unter dem Begriff hydraulische Bindemittel werden im vorliegenden Dokument Bindemittel verstanden, die auch unter Wasser abbinden, respektive erhärten, wie beispielsweise hydraulischer Kalk oder Zement. Unter dem Begriff latent hydraulische Bindemittel werden im vorliegenden Dokument Bindemittel verstanden, die erst durch Einwirkung von Zusätzen (Anregern) abbinden, respektive erhärten, wie beispielsweise Hüttensand. Unter dem Begriff puzzolanische Bindemittel werden im vorliegenden Dokument Bindemittel verstanden, die nicht selbstständig abbinden sondern nach Feuchtlagerung durch Bindung von Calciumhydroxid festigkeitsbildende Reaktionsprodukte liefern, wie beispielsweise Flugasche, Silica fume, sowie natürliche Puzzolane, wie z. B. Trass.

Vorzugsweise handelt es sich bei dem hydraulischen Bindemittel um Zement.

Das Polymer der Formel (XIV) kann in Form einer wässrigen Lösungen oder in wasserfreier Form direkt zu den pulverförmigen Substanzen gegeben werden, sie können vorzugsweise in einer Menge von etwa 0,01 bis 10 %, bevorzugt 0,05 bis 3 % Feststoff, bezogen auf das Gewicht der pulverförmigen Substanz (Trockengewicht), zugesetzt werden.

Die Polymere der Formel (XIV) zeigen im Vergleich zu bekannten Zusatzmitteln eine deutlich höhere Dispergierleistung.

Ein weiterer entscheidender Vorteil der Verwendung der Polymere der Formel (XIV) als Dispergiermittel für pulverförmige Substanzen liegt darin, dass sie ihre hohe Dispergierleistung auch dann nicht verlieren, wenn sie über längere Zeit, insbesondere in Form ihrer wässrigen Zubereitungen, gelagert werden

Unter dem Begriff "Dispergiermittel" wird im vorliegenden Dokument eine Substanz verstanden, die das Dispergieren von Teilchen in einem Dispersionsmittel erleichtern, indem sie die Grenzflächenspannung zwischen den beiden Komponenten erniedrigen, also Benetzung herbeiführen.

Ein weiterer Gegenstand der Erfindung ist ein Verfahren zur Verbesserung der Fliesseigenschaften von pulverförmigen Substanzen gekennzeichnet durch ein Zusetzen eines Polymers der Formel (XIV), wie sie vorgehend beschrieben wurden, zu einer pulverförmigen Substanz. Als Pulverförmige Substanzen sind insbesondere bevorzugt, welche vorgehend als bevorzugte pulverförmige Substanzen ausgewiesen wurden.

Vorzugsweise handelt es sich bei der pulverförmigen Substanz um ein mineralisches Bindemittel.

Ein weiterer Gegenstand der Erfindung ist eine Mischung enthaltend pulverförmige Substanzen und Polymere der Formel (XIV), wie sie vorgehend erwähnt wurden.

Auch ein Gegenstand der Erfindung ist eine Bindemittelmischung, die hydraulische Bindemittel und Polymere der Formel (XIV), wie sie vorgehend erwähnt wurden, enthält.

Weiter ist auch ein Baustoff auf Basis eines hydraulischen Bindemittels, das ein Polymer der Formel (XIV), wie sie vorgehend erwähnt wurden, enthält, ein Gegenstand der Erfindung.

### Beispiele

### Beschreibung der Messmethoden

Die **Viskosität** wurde auf einem Rotations-Viskosimeter der Firma Mettler Toledo des Typs RM 180 (Messsystem 11, Zylinder 1, Dichte 1.1, Intervall 100, Umdrehung 100 rpm) gemessen.

Die **Chromatographiemessungen** wurden mit einem ACQUITY UPLC® der Firma Waters Corporation unter Verwendung eines ELS- und PDA-Detectors sowie einer BEH 300 C18, 2.1 x 100 mm, 1.7 µm -Säule mit 0.15%-igem HCOOH in Wasser als Laufmittel A und Acetonitril als Laufmittel B.

### Herstellung von Verbindungen der Formel (I)

### Regler 1

Natrium-3-[methyl-poly(oxyethylen)-oxy-]propylphosphinat (Alkoxylierungsgrad: 2-8 EO, Mw 300-500 g/mol)

In einem Glasreaktor mit mechanischem Rührer, Thermometer und Tropftrichter wurden 212 g (2 mol) Natriumhypophosphit-monohydrat, gelöst in 212g Wasser, vorgelegt und auf 70°C erwärmt. Zu dieser Lösung wurden dann bei 75-80 °C innerhalb von 180 min gleichzeitig einerseits eine Lösung bestehend aus 350 g (ca. 2 mol) (Poly(oxyethylen)-allylmethylether (Alkoxylierungsgrad: 3-8 EO) und 300 g Wasser und gleichzeitig andererseits eine Lösung von 10 g Natriumpersulfat in 100 g Wasser zugetropft.

Anschliessend wurde noch 30 min bei 70 °C nachreagiert bis flüssigchromatographisch kein Allylmethylether mehr nachgewiesen werden konnte.

### Regler 2

Natrium-3-[methyl-poly(oxyethylen)-oxy-]propylphosphinat (Alkoxylierungsgrad: 3-10 EO, Mw 400-600 g/mol)

Die Herstellung von Regler 2 erfolgte analog zur Herstellung von Regler 1 mit dem Unterschied dass eine Lösung bestehend aus 500 g (ca. 2 mol) (Poly(oxyethylen)-allylmethylether (Alkoxylierungsgrad: 3-10 EO) und 300 g Wasser anstelle von einem Poly(oxyethylen)-allylmethylether mit einem Alkoxylierungsgrad von 2-8 EO verwendet wurde.

### Herstellung von Verbindungen der Formel (XIV)

### Beisplel 1 (P1)

Herstellung eines Polymers aus Acrylsäure unter Verwendung von Regler 1 als Molekulargewichtsregler.

### Vorlage:

60 g (ca. 0,1 mol) Regler 1 (57.5 %-ig in Wasser)
350 g Wasser

### Zulauf 1:

576 g (8 mol) Acrylsäure
110 g Wasser

### Zulauf 2:

60 g (ca. 0,1 mol) Regler 1 (57.5 %-ig in Wasser)
100 g Wasser

### Zulauf 3:

24 g Natriumperoxodisulfat
100g Wasser

In einem 2 Liter fassenden 4-Hals-Rundkolben, versehen mit Thermometer, Ankerrührer mit kühlbarem Rührverschluss, 40 cm-Kugelkühler und kühlbarem Einleitungsrohr für Zuläufe mit automatischen Dosiervorrichtungen wurden 350 g Wasser und 60 g (ca. 0,1 mol) Regler 1 (57.5 %-ig in Wasser) vorgelegt und auf 80 °C erhitzt.

Dann wurden 14 ml von Zulauf 3 zudosiert. Anschliessend wurde unter Sieden und Rühren innerhalb von 180 min Zulauf 1 zudosiert und gleichzeitig wurden Zulauf 2 und Zulauf 3 gestartet und so zugegeben, dass Zulauf 2 ca. 5 min vor beendeter Zugabe von Zulauf 1 zugegeben war.

Die Zulaufzeit von Zulauf 3 war ca. 10 min nach Ende von Zulauf 1 beendet. Danach wurde das Reaktionsgemisch solange (ca. 30 Minuten) bei 100°C nachpolymerisiert bis kein Peroxyd mehr nachgewiesen werden konnte. Nach Abkühlen auf 50°C wurde eine klare Polymerlösung mit einem Feststoffgehalt von 50.4 %, mit einer Viskosität von 610 mPa•s und einem Molekulargewicht von Mw=5000 g/mol erhalten.

### Beispiel 2 (P2)

Herstellung eines Polymers aus Methacrylsäure unter Verwendung von Regler 1 als Molekulargewichtsregler.

### Vorlage:

350 g Wasser

### Zulauf 1:

860 g (10 mol) Methacrylsäure
500 g Wasser

### Zulauf 2:

690 g (ca. 0,9 mol) Regler 1 (50%-ig in Wasser)
210 g Wasser

### Zulauf 3:

25 g Natriumperoxodisulfat
180 g Wasser

In einem 3 Liter fassenden 4-Hals-Rundkolben, versehen mit Thermometer, Ankerrührer mit kühlbarem Rührverschluss, 40 cm-Kugelkühler und kühlbarem Einleitungsrohr für Zuläufe mit automatischen Dosiervorrichtungen wurden 350 g Wasser zum Rückfluss erhitzt. Dann wurden 70 ml von Zulauf 2 zu dosiert. Anschliessend wurden 13.6 ml von Zulauf 3 zu dosiert.

Danach wurde unter leichtem Rückfluss und Rühren innerhalb von 180 min Zulauf 1 zu dosiert und gleichzeitig wurden Zulauf 2 und Zulauf 3 gestartet und so zugegeben, dass Zulauf 2 ca. 5 min vor beendeter Zugabe von Zulauf 1 zugegeben war.

Die Zulaufzeit von Zulauf 3 war ca. 10 min nach Ende von Zulauf 1 beendet. Danach wurde das Reaktionsgemisch solange (ca. 30 Minuten) bei 100°C nachpolymerisiert bis kein Peroxyd mehr nachgewiesen werden konnte. Nach Abkühlen auf 50°C wurde eine klare Polymerlösung mit einem Feststoffgehalt von 41 %, mit einer Viskosität von 1500 mPa•s und einem Molekulargewicht von Mw=6500 g/mol erhalten.

### Beispiel 3 (P3)

Herstellung eines Copolymers aus Acrylsäure, Hydroxyethylacrylat und Vinylether unter Verwendung von Regler 2 als Molekulargewichtsregler.

### Vorlage:

300 g Wasser
200 g Methyl-poly(oxyethylen)vinylether (Alkoxylierungsgrad: ca. 100 EO) (ca. 0,05 mol)
2 g Natronlauge (50%-ig in Wasser)
11.5 g (ca. 0,02 mol) Regler 2 (77 %-ig in Wasser)

### Zulauf 1:

7.2 g (10 mol) Acrylsäure
23.4 g Hydroxyethylacrylat
50 g Wasser

### Zulauf 2:

1.2 g Rongalit C
10 g Wasser

### Zulauf 3:

2.2 g Wasserstoffperoxyd (35 %-ig in Wasser)
10 g Wasser

In einem 3 Liter fassenden 4-Hals-Rundkolben, versehen mit Thermometer, Ankerrührer mit kühlbarem Rührverschluss, 40 cm-Kugelkühler und kühlbarem Einleitungsrohr für Zuläufe mit automatischen Dosiervorrichtungen wurden zur Vorlage unter Rühren 30 g von Zulauf 1 sowie 0.05 g Eisen-II-sulfatheptahydrat zu dosiert.

Dann wurde die Lösung 2 zur Lösung 1 gegeben, kurz gemischt und mittels einer Dosierpumpe in 10 Minuten unter gleichzeitigem Zutropfen der Lösung 3 zur Vorlage dosiert. Dabei stieg die Temperatur des Reaktionsgemisches von 21 °C auf 33°C. Die Lösung wurde noch 15 Minuten nachgerührt bis kein Peroxyd mehr nachgewiesen werden konnte. Die klare leicht braune Lösung hat einen Feststoffgehalt von 38%.

### Beispiel 4 (P4)

Herstellung eines Polymers aus Methacrylsäure unter Verwendung von Regler 1 als Molekulargewichtsregler mit nachträglicher Veresterung.

In einem 1500ml Reaktionsgefäss, ausgestattet mit einem mechanischem Rührwerk, Temperaturüberwachung, Heizpilz und Vakuumpumpe, werden ca. 580 g (ca. 2 mol COOH) einer wässrigen Polymethacrylsäure, welche mittels Regler 1 hergestellt wurde, vorgelegt. Dazu wurden ca. 500 g Methylpolyethylenglycol und unter Rühren ca. 5 g 37 %-ige Schwefelsäure zugegeben. Das Reaktionsgemisch wurde auf 175°C erwärmt, wobei das Wasser abdestilliert wurde. Nach 30-minütigem Rühren bei dieser Temperatur wurden zum Reaktionsgemisch eine Mischung bestehend aus 6.47g Jeffamin M2070 und 6.47 g 50 %-ige Natronlauge vorsichtig zugegeben. Sobald das Reaktionsgemisch wieder 175°C erreicht hatte, wurde die Reaktion bei einem Unterdruck von 80 mbar bis zum gewünschten Umsatz durchgeführt, so dass ca. 95% des MPEGs verestert wurde (bestimmt anhand von UPLC). Die Schmelze wurde abgekühlt und mit Wasser auf einen Feststoffgehalt von 50% verdunnt.

### Beispiel 5 (P5)

Herstellung eines Copolymers aus Maleinsäure, Allylether und Vinylester unter Verwendung von Regler 1 als Molekulargewichtsregler,

In einem 1000 ml Reaktionsgefäss mit Rührer, Thermometer und Rückflusskühler wurden 200 g Wasser, 46.4 g Maleinsäure (0.4mol), 330 g eines Ally-Polyglycolethers (0.3 mol, Mw=1000-2000 g/mol), 8.6 g Vinylacetat (0.1 mol) und 35 g Regler 1 (50 %-ig in Wasser) vorgelegt. Dann wurden 0.1 g Eisen-II-sulfat heptahydrat zugegeben und gerührt.

Danach wurde die Temperatur auf 25 °C gebracht. Anschliessend wurde eine Lösung A, bestehend aus 135 g Wasser und 14.4 g Acrylsäure (0.2 mol) hergestellt. Weiter wurde eine Lösung B bestehend aus 38 g Wasser und 12 g 35%-igem Wasserstoffperoxyd hergestellt. Weiter wurde eine Lösung C bestehend aus 45 g Wasser und 5 g Rongalit C hergestellt. Es wurde über einen Zeitraum von 80 min die Lösungen A, B und C gleichzeitig unter Rühren zur Vorlage getropft. Dabei wurde die Temperatur zwischen 30-45 °C gehalten. Nach erfolgter Zugabe wurde noch 30 Min nachgerührt. Es wurde eine farblose leicht viskose Losung erhalten mit einem Feststoffgehalt von 48%.

### Beispiel 6 (P6)

Herstellung eines Copolymers aus Methacrylsäure und Methylpoly(oxyethylen)methaycrylat unter Verwendung von Regler 1 als Molekulargewichtsregler.

| | |
|---|---|
| Vorlage 1: | 450 g Wasser |
| | |
| Zulauf 1: | 775 g Polyglycol MA 1000 (Clariant) 70%-ig in Wasser (0.5 Mol) |
| | 129 g Methacrylsäure |
| | 100 g Wasser |
| | 0.1 g Eisen-(II)-sulfat-Heptahydrat |
| Zulauf 2: | 10 g Natriumpersulfat |
| | 100 g Wasser |
| | |
| Zulauf 3: | 114 g Regler 1 (50 %-ig) |
| | 50 g Wasser |

In einem 1,5 Liter fassenden 3-Halsglaskolben mit Thermometer und Rührer wurde Vorlage 1 auf 80 °C aufgeheizt. Dann wurde 10 ml von Zulauf 2 und 15 ml Zulauf 3 zugegeben Danach wurden alle Zuläufe mittels Dosierpumpe innert 3 Stunden so zudosiert, dass eine Reaktionstemperatur von 90°C bis 95°C gehalten werden konnte.

Nach erfolgter Zugabe wurde noch 30 min nachgerührt bis kein Peroxyd mehr nachgewiesen werden konnte. Nach Abkühlen auf 50 °C wurde eine klare Polymerlösung mit einem Feststoffgehalt von 42% erhalten.

### Herstellung von Vergleichsbeispiele

### Vergleichsbeispiele VP1 - VP6

Die Vergleichsbeispiele ***VP1 - VP6*** wurden analog zu den Beispielen ***P1* - *P6*** mit dem Unterschied hergestellt, dass anstelle der Molekulargewichtsregler Regler 1 und Regler 2 eine äquimolare Menge Natriumphosphit eingesetzt wurde.

Bei der Lagerung der Vergleichsbeispiele ***VP1 - VP6*** bei 5°C über 3 Monate wurde festgestellt, dass die Vergleichsbeispiele Ablagerungen/Ausfällungen bildeten. Bei den Beispielen ***P1* - *P6*** wurde bei entsprechender Lagerung keinerlei solcher Ablagerungen/Ausfällungen beobachtet.

### Messungen Dispergiervermögen

### Messung Dispergiervermögen im Zement

100 g Zement CEM 142.5 werden in einem Becher genau abgewogen. In einem zweiten Becher werden 30 g Wasser genau abgewogen und mit 0.5 g einer 40%-igen Polymerlösung vermischt (200 mg Feststoff). Diese Mischung wurde dann zum Zement gegeben und 2 min mittels eines Holzspatels gut gemischt. Anschliessend wurde die Paste in einen Konus (Konusmasse: Höhe 58 mm, Breite innen unten 38 mm, Breite innen oben 19 mm, Inhalt 38 ml) gefüllt und nach 15 Sekunden wurde der Konus langsam angehoben. Die ausgeflossene Masse wurde anschliessend übers Kreuz ausgemessen und der Mittelwert der beiden Messungen bestimmt. Die Werte sind in Tabelle 1 ersichtlich.

### Messung Dispergiervermögen im Kreide

100 g Nekafill 15 (CaCO₃ der Kalkfabrik Netstal) wurden in einem Becher abgewogen. In einem zweiten Becher wurden 20 g, resp. 30 g Wasser, abgewogen und mit 0.5 g einer 40 %-igen Polymerlösung vermischt (200 mg Feststoff). Diese Mischung wurde dann zum Calciumcarbonat gegeben und 2 min mittels eines Holzspatels gut gemischt. Anschliessend wurde die Paste in einen Konus (Konusmasse: Höhe 58 mm, Breite innen unten 38 mm, Breite innen oben 19 mm, Inhalt 38 ml) gefüllt und nach 15 Sekunden wurde der Konus langsam angehoben. Die ausgeflossene Masse wurde anschliessend übers Kreuz ausgemessen und der Mittelwert der beiden Messungen bestimmt. Die Werte sind in Tabelle 2 ersichtlich.

**Tabelle 1, Dispergiervermögen im Zement, k.A. = kein Ausbreiten, * die ausgeflossene Masse wurde nach 60 min, resp. 90 min, erneut vermessen und ergab bei P3 einen Wert von 70 mm, resp. 125 mm, im Gegensatz zu VP3 und der Messung ohne Polymer (-), wo nach 60 min, resp 90 min, immer noch kein Ausbreiten festgestellt werden konnte.**

| **Polymer** | **Polymer** | **Ausbreitmass** |
|---|---|---|
| ***P1*** | Polymer aus Acrylsäure, Regler 1 | 88mm |
| ***P2*** | Polymer aus Methacrylsäure, Regler 1 | 79 mm |
| ***P3*** | Copolymer aus Acrylsäure, Hydroxyethylacrylat und Vinylether, Regler 2 | k.A.* |
| ***P4*** | Polymer aus Methacrylsäure, Regler 1, nachträglich Veresterung. | 101 mm |
| ***P5*** | Copolymer aus Maleinsäure, Allylether und Vinylester, Regler 1 | 135 mm |
| ***P6*** | Copolymer aus Methacrylsäure und Methylpoly(oxyethylen)methaycrylat, Regler 1 | 49 mm |
| ***VP1*** | Polymer aus Acrylsäure, Regler Na-phosphit | 64 mm |
| ***VP2*** | Polymer aus Methacrylsäure, Regler Na-phosphit | 56 mm |
| ***VP3*** | Copolymer aus Acrylsäure, Hydroxyethylacrylat und Vinylether, Regler Na-phosphit | k.A. * |
| ***VP4*** | Polymer aus Acrylsäure, Regler Na-phosphit, nachträglich Veresterung. | 92 mm |
| ***VP5*** | Copolymer aus Maleinsäure, Allylether und Vinylester, Regler Na-phosphit | 133 mm |
| ***VP6*** | Copolymer aus Methacrylsäure und Methylpoly(oxyethylen)methaycrylat, Regler Na-phosphit | 39 mm |
| **-** | Ohne Polymer | k A. * |

**Tabelle 2, Dispergiervermögen in Kreide, k.A. = kein Ausbreiten**

| **Polymer** | **Polymer** | **Wasser (g)** | **Ausbreitmass** |
|---|---|---|---|
| ***P1*** | Polymer aus Acrylsäure, Regler 1 | 30 | 43 mm |
| ***P2*** | Polymer aus Methacrylsäure, Regler 1 | 30 | 56 mm |
| ***P3*** | Copolymer aus Acrylsäure, Hydroxyethylacrylat und Vinylether, Regler 2 | 20 | 101 mm |
| ***P4*** | Polymer aus Methacrylsäure, Regler 1, nachträglich Veresterung. | 20 | 150 mm |
| ***P5*** | Copolymer aus Maleinsäure, Allylether und Vinylester, Regler 1 | 20 | 154 mm |
| ***P6*** | Copolymer aus Methacrylsäure und Methyl-poly(oxyethylen)methaycrylat, Regler 1 | 20 | 153 mm |
| ***VP1*** | Polymer aus Acrylsäure, Regler Na-phosphit | 30 | 41 mm |
| ***VP2*** | Polymer aus Methacrylsäure, Regler Na-phosphit | 30 | 51 mm |
| ***VP3*** | Copolymer aus Acrylsäure, Hydroxyethylacrylat und Vinylether, Regler Na-phosphit | 20 | k.A. |
| ***VP4*** | Polymer aus Acrylsäure, Regler Naphosphit, nachträglich Veresterung | 20 | 146 mm |
| ***VP5*** | Copolymer aus Maleinsäure, Allylether und Vinylester, Regler Na-phosphit | 20 | 150 mm |
| ***VP6*** | Copolymer aus Methacrylsäure und Methyl-poly(oxyethylen)methaycrylat, Regler Na-phosphit | 20 | 123 mm |
| - | Ohne Polymer | 30 | k.A. |

## Patentansprüche

1. Verwendung eines Polymers der Formel (XIV) als Dispergiermittel für pulverförmige Substanzen 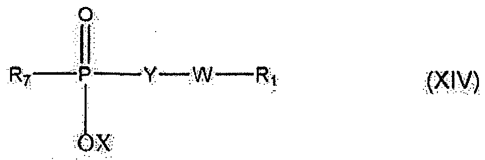 wobei
wobei **X** für H⁺, Alkalimetallion, Erdalkalimetallion, zwei- oder dreiwertiges Metallion, Ammoniumion, organische Ammoniumgruppe oder einen organischen Rest mit einem Molekulargewicht von ≤ 200 g/mol steht, insbesondere für Na⁺ oder K⁺ steht;
wobei **Y** für eine der Formeln (II) bis (VI) steht 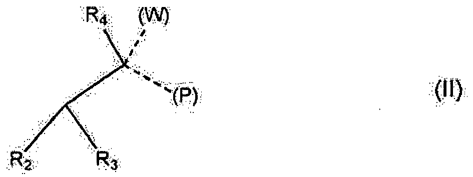 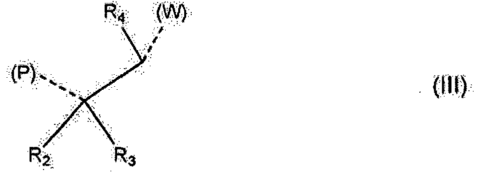 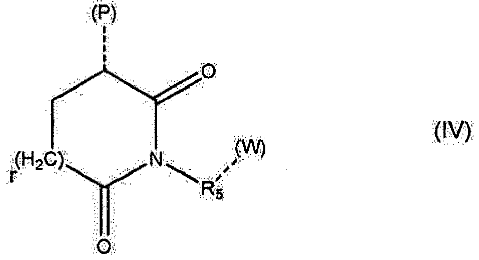 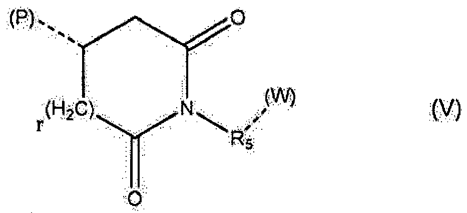 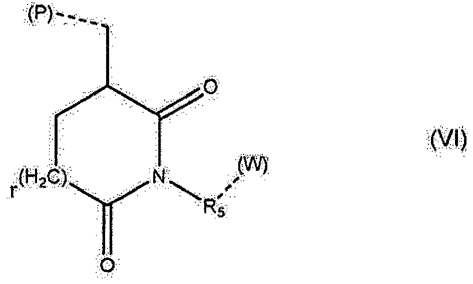 wobei **W** für eine der Formeln (VII) bis (X) steht; 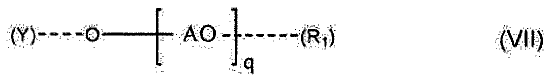 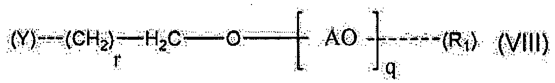 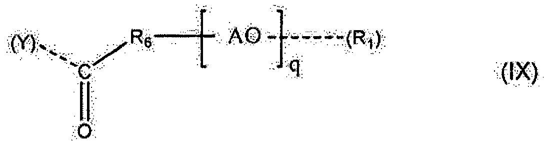 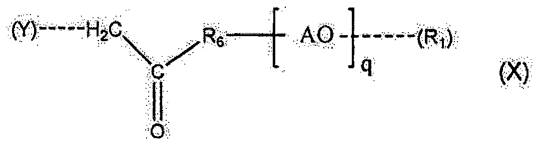 wobei R₁ für H, eine Alkylgruppe, vorzügsweise mit 1 bis 20 C-Atomen, eine Alkylarylgruppe, vorzugsweise mit 7 bis 20 C-Atomen, oder die Formel (XI) steht 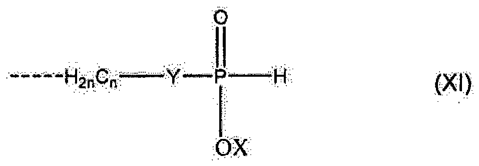 wobei der Substituent A unabhängig voneinander für eine C₂- bis C₄-Alkylengruppe steht, der Index q einen Wert von 2 bis 300, insbesondere von 2 bis 50, besonders bevorzugt von 3 bis 10, darstellt, der Index n einen Wert von 2 bis 4, vorzugsweise einen Wert von 2, darstellt, der Index r einen Wert von 0 bis 1 darstellt,
wobei R₂, R₃ und R₄ unabhängig voneinander für H, CH₃, COOH oder CH₂-COOH stehen,
R₅ für -CH₂-CH₂- oder -CH₂-CH(CH₃)- und
R₆ für O oder N steht
und R₇ für ein Polymer umfassend mindestens ein Monomer **M** in polymerisierten Zustand steht, wobei R₇ ein Molekulargewicht von 500-200'000 g/mol, vorzugsweise 2'000-50'000 g/mol aufweist,
wobei das Monomer **M** ausgewählt ist aus der Gruppe bestehend aus:
• monoethylenisch ungesättigten (C₃-C₆)-Mono- und Dicarbonsäuren,
sowie deren C1 - C20-Alkylester und (Methyl-)Poly(oxyalkylen)ester,
deren Amide, Nitrile und Anhydride,
• (C₁-C₂₀)-(Meth-)Alkylacrylaten, (C₁-C₂₀)-(Meth-)Alkylacrylamiden, (C₁-C₂₀)-(Meth-)Alkylacrylnitrilen und (Methyl-)Poly(oxyalkylen)(meth-)acrylaten,
• Vinylestern von bis zu 20 C-Atome enthaltenden Carbonsäuren, Vinylaromaten mit bis zu 20C-Atomen,
• Vinylethern und Allylethern von 1 bis 12 C-Atomen enthaltenden Alkoholen, (Methyl-)Poly(oxyalkylen)-allylethern, (Methyl-)Poly (oxyalkylen)vinylethern,
• aliphatischen Kohlenwasserstoffen mit 2 bis 10 C-Atomen und 1 oder 2 olefinischen Doppelbindungen, cyclischen und offenkettigen N-Vinylamiden,
• und Mischungen dieser Monomeren.

2. Verwendung gemäss Anspruch 1, **dadurch gekennzeichnet, dass** die
pulverförmige Substanz ausgewählt ist aus der Gruppe bestehend aus Tonen, Porzellanschlicker, Silikatmel, Kreide, Ruß, Gesteinsmehl.
Pigmenten, Talkum, Kunststoffpulvern und mineralischen Bindemitteln.

3. Verwendung gemäss Anspruch 2, **dadurch gekennzeichnet, dass** die pulverförmige Substanz ein mineralischen Bindemittel ist.

4. Verwendung gemäss Anspruch 3, **dadurch gekennzeichnet, dass** die pulverförmige Substanz ein mineralischen Bindemittel ist.

5. Verwendung gemäss einem der vorhergehenden Ansprüche, **dadurch gekennzeichnet, dass** es sich bei der pulverförmigen Substanz um eine Feststoffsuspension, insbesondere eine wässrige Aufschlämmungen, handelt.

6. Verwendung gemäss einem der vorhergehenden Ansprüche, **dadurch gekennzeichnet, dass** die Monomere **M** ausgewählt sind aus der Gruppe bestehend aus:
• monoethylenisch ungesättigten (C₃-C₆)-Mono- und Dicarbonsäuren, sowie deren C1 - C20-Alkylester und (Methyl-)Poly(oxyalkylen)ester, deren Amide, Nitrile und Anhydride,
• (C₁-C₂₀)-(Meth-)Alkylacrylaten, (C₁-C₂₀)-(Meth-)Alkylacrylamiden, (C₁-C₂₀)-(Meth-)Alkylacrylnitrilen und (Methyl-)Poly(oxyalkylen)(meth-)acrylaten,
• Vinylestern von bis zu 20 C-Atome enthaltenden Carbonsäuren, Vinylaromaten mit bis zu 20 C-Atomen,
• Vinylethern und Allylethern von 1 - 12 C-Atome enthaltenden Alkoholen, (Methyl-)Poly(oxyalkylen)-allylethern, (Methyl-)Poly(oxyalkylen)-vinylethern.

7. Verwendung gemäss einem der Ansprüche 1-5, **dadurch gekennzeichnet, dass** die Monomere **M** Mischungen der folgenden Monomerklassen sind:
• monoethylenisch ungesättigten (C₃-C₆)-Mono- und Dicarbonsäuren, sowie deren C1 - C20-Alkylester und (Methyl-)Poly(oxyalkylen)ester, deren Amide, Nitrile und Anhydride,
• (C₁-C₂₀)-(Meth-)Alkylacrylaten, (C₁-C₂₀)-(Meth-)Alkylacrylamiden, (C₁-C₂₀)-(Meth-)Alkylacrylnitrilen und (Methyl-)Poly(oxyalkylen)(meth-)acrylaten,
• Vinylethern und Allylethern von 1 - 12 C-Atome enthaltenden Alkoholen, (Methyl-)Poly(oxyalkylen)-allylethern, (Methyl-)Poly(oxyalkylen)-vinylethern.

8. Verwendung gemäss einem der Ansprüche 1-5, **dadurch gekennzeichnet, dass** die Monomere **M** Mischungen der folgenden Monomerklassen sind:
• monoethylenisch ungesättigten (C₃-C₆)-Mono- und Dicarbonsäuren, sowie deren C1 - C20-Alkylester und (Methyl-)Poly(oxyalkylen)ester, deren Amide, Nitrile und Anhydride,
• Vinylestern von bis zu 20 C-Atome enthaltenden Carbonsäuren, Vinylaromaten mit bis zu 20 C-Atomen,
• Vinylethern und Allylethern von 1 - 12 C-Atome enthaltenden Alkoholen, (Methyl-)Poly(oxyalkylen)-allylethern, (Methyl-)Poly(oxyalkylen)-vinylethern.

9. Verfahren zur Verbesserung der Fliesseigenschaften von pulverförmigen Substanzen, **dadurch gekennzeichnet, dass** man einer pulverförmigen Substanz ein Polymers der Formel (XIV) gemäss einem der Ansprüche 1-8 zusetzt.

10. Verfahren gemäss Anspruch 9, **dadurch gekennzeichnet, dass** es sich bei der pulverförmigen Substanz um ein mineralisches Bindemittel handelt.

11. Mischung enthaltend Polymere der Formel (XIV) gemäss einem der Ansprüche 1-8 und pulverförmige Substanzen.

12. Bindemittelmischung, die Polymere der Formel (XIV) gemäss einem der Ansprüche 1-8 und hydraulische Bindemittel enthält.

13. Baustoff auf Basis eines hydraulischen Bindemittels, das ein Polymer der Formel (XIV) gemäss einem der Ansprüche 1-8 enthält.

## Claims

1. Use of a polymer of formula (XIV) as a dispersing agent for powdery
substances 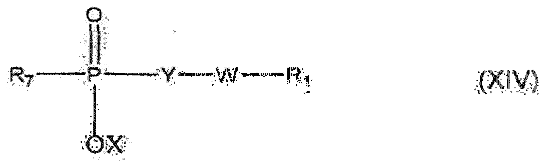 wherein
wherein **X** represents H⁴, alkali metal ion, alkaline earth metal ion, divalent or trivalent metal ion, ammonium ion, organic ammonium group or an organic residue with a molecular weight of ≤ 200 g/mol,
in particular Na⁺ or K⁺;
wherein **Y** represents one of formulae (II) to (VI) 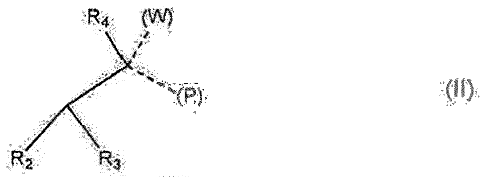 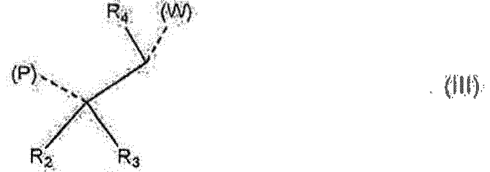 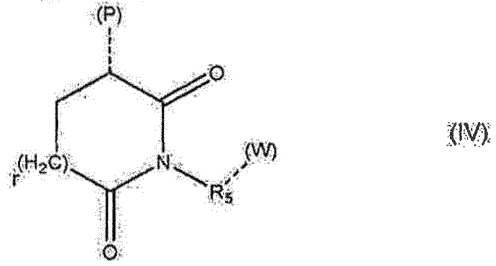 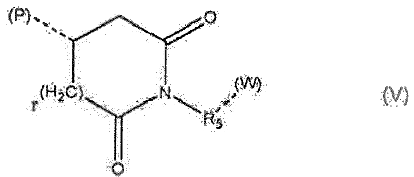 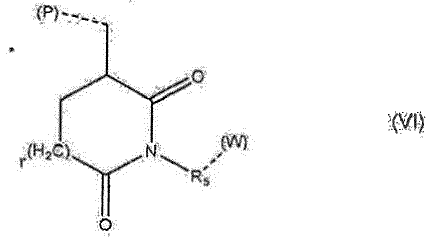 wherein **W** represents one of formulae (VII) to (X); 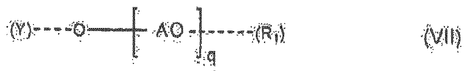 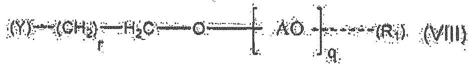 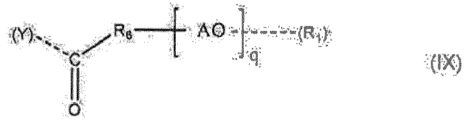 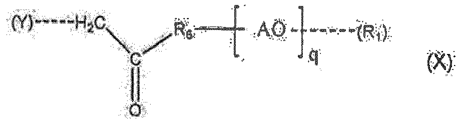 wherein R₁ represents H, an alkyl group, preferably with 1 - 20 carbon atoms, an alkyl aryl group, preferably with 7 - 20 carbon atoms, or formula (XI) 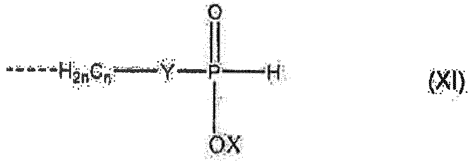 wherein the substituent A independently represents a C₂ to C₄ alkylene group, the index q represents a value of from 2 to 300, in particular from 2 to 50, most preferably from 3 to 10, index n represents a value of from 2 to 4, preferably a value of 2, and index r represents a value of from 0 to 1,
wherein R₂, R₃ and R₄ independently represent H, CH₃, COOH or CH₂-COOH,
R₅ represents -CH₂-CH₂ or -CH₂-CH(CH3) and
R₆ represents O or N
and R₇ represents a polymer comprising at least one monomer **M** in polymerised state, wherein R₇ has a molecular weight of from 500 - 200,000 g/mol, preferably from 2,000
- 50,000 g/mol,
wherein the monomer **M** is selected from the group comprising:
• mono-ethylenically unsaturated (C₃-C₆) monocarboxylic or dicarboxylic acids and their C1 - C20 alkyl esters and (methyl) poly(oxyalkylene) esters, their amides, nitriles and anhydrides,
• (C₁ - C₂₀) (meth)alkyl acrylates, (C₁ - C₂₀) (meth)alkyl acrylamides, (C₁ - C₂₀) (meth)alkyl acrylonitriles and (methyl) poly(oxyalkylene) (meth)acrylates,
• vinyl esters of carboxylic acids containing up to 20 carbon atoms, vinyl aromates with up to 20 carbon atoms,
• vinyl ethers and allyl ethers of alcohols containing between 1 and 12 carbon atoms, (methyl) poly(oxyalkylene) allyl ethers, (methyl) poly(oxyalkylene) vinyl ethers,
• aliphatic hydrocarbons with 2 to 10 carbon atoms and 1 or 2 olefinic double bonds, cyclic and open-chain N-vinyl amides,
• and mixtures of these monomers.

2. Use according to claim 1, **characterised in that** the powdery substance is selected from the group comprising clays, porcelain slurry, silicate powder, chalk, soot, rock flour, pigments, talcum, plastic powders and mineral binders.

3. Use according to claim 2, **characterised in that** the powdery substance is a mineral binder.

4. Use according to claim 3, **characterised in that** the powdery substance is a mineral binder.

5. Use according to any of the previous claims, **characterised in that** the powdery substance is a solid matter suspension, in particular an aqueous slurry.

6. Use according to any of the previous claims, **characterised in that** the monomers **M** are selected from the group comprising:
• mono-ethylenically unsaturated (C₃-C₆) monocarboxylic or dicarboxylic acids and their C1 - C20 alkyl esters and (methyl) poly(oxyalkylene) esters, their amides, nitriles and anhydrides,
• (C₁ - C₂₀) (meth)alkyl acrylates, (C₁ - C₂₀) (meth)alkyl acrylamides, (C₁ - C₂₀) (meth)alkyl acrylonitriles and (methyl) poly(oxyalkylene) (meth)acrylates,
• vinyl esters of carboxylic acids containing up to 20 carbon atoms, vinyl aromates with up to 20 carbon atoms,
• vinyl ethers and allyl ethers of alcohols containing between 1 and 12 carbon atoms, (methyl) poly(oxyalkylene) allyl ethers, (methyl) poly(oxyalkylene) vinyl ethers.

7. Use according to any of claims 1 - 5, **characterised in that** the monomers **M** are mixtures of the following monomer classes:
• mono-ethylenically unsaturated (C₃-C₆) monocarboxylic or dicarboxylic acids and their C1 - C20 alkyl esters and (methyl) poly(oxyalkylene) esters, their amides, nitriles and anhydrides,
• (C₁ - C₂₀) (meth)alkyl acrylates, (C₁ - C₂₀) (methyl)alkyl acrylamides, (C₁
- C₂₀)-(meth)alkyl acrylonitriles and (methyl) poly(oxyalkylene) (meth)acrylates,
• vinyl ethers and allyl ethers of alcohols containing between 1 and 12 carbon atoms, (methyl) poly(oxyalkylene) allyl ethers, (methyl) poly(oxyalkylene) vinyl ethers.

8. Use according to any of claims 1 - 5, **characterised in that** the monomers **M** are mixtures of the following monomer classes:
• mono-ethylenically unsaturated (C₃-C₆) monocarboxylic or dicarboxylic acids and their C1 - C20 alkyl esters and (methyl) poly(oxyalkylene) esters, their amides, nitriles and anhydrides,
• vinyl esters of carboxylic acids containing up to 20 carbon atoms, vinyl aromates with up to 20 carbon atoms,
• vinyl ethers and allyl ethers of alcohols containing between 1 and 12 carbon atoms, (methyl) poly(oxyalkylene) allyl ethers, (methyl) poly(oxyalkylene) vinyl ethers.

9. Method for improving the flow properties of powdered substances, **characterised in that** a polymer of formula (XIV) according to any of claims 1 - 8 is added to a powdery substance.

10. Method according to claim 9, **characterised in that** the powdery substance is a mineral binder.

11. Mixture containing polymers of formula (XIV) according to any of claims 1 - 8 and powdered substances.

12. Binder mixture containing polymers of formula (XIV) according to any of claims 1 - 8 and hydraulic binders.

13. Building material based on a hydraulic binder containing a polymer of formula (XIV) according to any of claims 1 - 8.

## Revendications

1. Utilisation d'un polymère de formule (XIV) comme agent dispersant pour substances pulvérulentes : 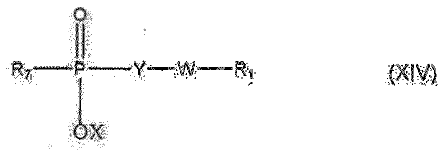 dans laquelle :
X désigne H⁺, un ion de métal alcalin, un ion de métal alcalinoterreux, un ion métallique bivalent ou trivalent, un ion d'ammonium, un groupement d'ammonium organique ou un résidu organique avec un poids moléculaire ≤ 200 g/mole, en particulier Na⁺ ou K⁺ ;
dans laquelle Y désigne une des formules (II) à (VI) : 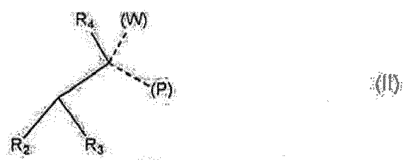 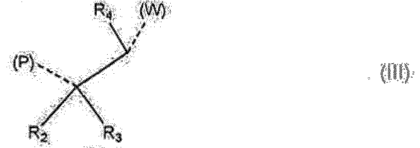 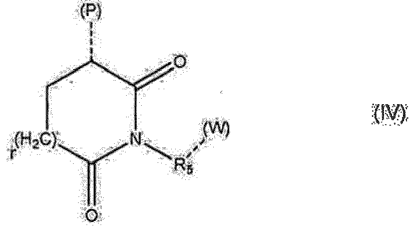 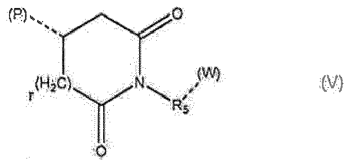 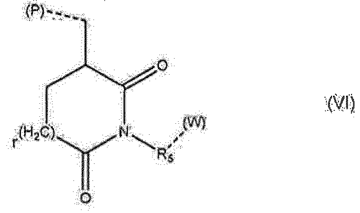
dans laquelle W désigne l'une des formules (VII) à (X) : 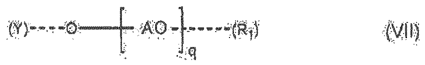 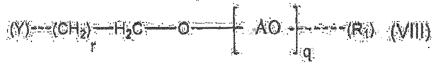 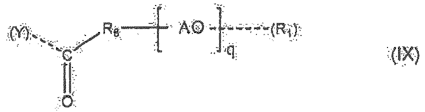 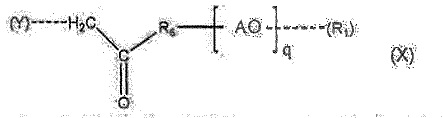
dans laquelle R₁ est H, un groupement alkyle, de préférence avec 1 à 20 atomes de carbone, un groupement alkylaryle, de préférence avec 7 à 20 atomes de carbone, ou la formule (XI) : 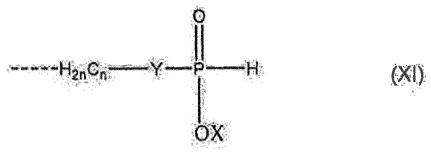
dans laquelle les substituants A sont indépendamment l' un de l'autre un groupement alkylène en C₂ à C₄, l'indice q a une valeur de 2 à 300, en particulier de 2 à 50, tout particulièrement de 3 à 10, l'indice n a une valeur de 2 à 4, de préférence une valeur de 2, l'indice r a une valeur de 0 à 1,
dans laquelle R₂, R₃ et R₄ sont indépendamment l'un de l'autre H, CH₃, COOH ou CH₂-COOH,
R₅ désigne -CH₂-CH₂- ou -CH₂-CH (CH₃) - et
R₆ désigne O ou N,
et R₇ désigne un polymère comprenant au moins un monomère M à l'état polymérisé, où R₇ a un poids moléculaire de 500 à 200 000 g/mole, de préférence de 2000 à 50 000 g/mole,
dans laquelle le monomère M est choisi dans le groupe constitué des suivantes :
• les acides mono- et dicarboxyliques en C₃-C₆ à insaturation monoéthylénique ainsi que leurs esters alkyliques en C₁-C₂₀ et leurs polyoxy(oxyalkylène)esters de méthyle, leurs amides, nitriles et anhydrides,
• les (méth)acrylates d' alkyle en C₁-C₂₀, les (méth)acrylamides d' alkyle en C₁-C₂₀, les (méth)acrylonitriles d' alkyle en C₁-C₂₀ et les poly(oxyalkylène)(méth)acrylates de méthyle,
• les esters vinyliques d'acides carboxyliques contenant jusqu'à 20 atomes de carbone, les vinylaromatiques avec jusqu'à 20 atomes de carbone,
• les éthers vinyliques et les éthers allyliques d'alcools contenant 1 à 12 atomes de carbone, les poly(oxyalkylène)allyléthers de méthyle, les poly(oxyalkylène)vinyléthers de méthyle,
• les hydrocarbures aliphatiques ayant 2 à 10 atomes de carbone et 1 ou 2 liaisons doubles oléfiniques, les N-vinylamides cycliques et à chaîne ouverte, et
• les mélanges de ces monomères.

2. Utilisation selon la revendication 1, **caractérisée en ce que** la substance pulvérulente est choisie dans le groupe constitué des argiles, des barbotines de porcelaine, des fines de silicates, de la craie, de la suie, des fines minérales, des pigments, du talc, des poudres de matières plastiques et des liants minéraux.

3. Utilisation selon la revendication 2, **caractérisée en ce que** la substance pulvérulente est un liant minéral.

4. Utilisation selon la revendication 3, **caractérisée en ce que** la substance pulvérulente est un liant minéral.

5. Utilisation selon l'une quelconque des revendications précédentes, **caractérisée en ce que** la substance pulvérulente est une suspension de matière solide, en particulier une suspension aqueuse.

6. Utilisation selon l'une quelconque des revendications précédentes, **caractérisée en ce que** les monomères M sont choisis dans le groupe constitué des suivantes :
• les acides mono- et dicarboxyliques à insaturation monoéthylénique en C₃-C₆ ainsi que leurs esters alkyliques en C₁-C₂₀ et leurs poly(oxyalkylène)-esters de méthyle, leurs amides, nitriles et anhydrides,
• les (méth)acrylates d'alkyle en C₁-C₂₀, les (méth)acrylamides d'alkyle en C₁-C₂₀, les (méth)acrylonitriles d'alkyle en C₁-C₂₀ et les poly(oxyalkylène)(méth)acrylates de méthyle,
• les esters vinyliques d'acides carboxyliques contenant jusqu'à 20 atomes de carbone, les vinylaromatiques jusqu'à 20 atomes de carbone,
• les éthers vinyliques et les éthers allyliques d'alcools contenant 1 à 12 atomes de carbone, les poly(oxyalkylène)allyléthers de méthyle et les poly(oxyalkylène)vinyléthers de méthyle.

7. Utilisation selon l'une quelconque des revendications 1 à 5, **caractérisée en ce que** les monomères M sont des mélanges des classes de monomères suivantes :
• les acides mono- et dicarboxyliques à insaturation monoéthylénique en C₃-C₆, ainsi que leurs esters alkyliques en C₁-C₂₀ et leurs poly(oxyalkylène)-esters de méthyle, leurs amides, nitriles et anhydrides,
• les (méth)acrylates d' alkyle en C₁-C₂₀, les (méth)acrylamides d' alkyle en C₁-C₂₀, les (méth)acrylonitriles d' alkyle en C₁-C₂₀ et les poly(oxyalkylène)(méth)acrylates de méthyle,
• les éthers vinyliques et les éthers allyliques d'alcools contenant 1 à 12 atomes de carbone, les poly(oxyalkylène)allyléthers de méthyle et les poly(oxyalkylène)vinyléthers de méthyle.

8. Utilisation selon l'une quelconque des revendications 1 à 5, **caractérisée en ce que** les monomères sont des mélanges des classes de monomères suivantes :
• les acides mono- et dicarboxyliques à insaturation monoéthylénique en C₃-C₆, ainsi que leurs esters alkyliques en C₁-C₂₀ et leurs poly(oxyalkylène)-esters de méthyle, leurs amides, nitriles et anhydrides,
• les esters vinyliques d'acides carboxyliques contenant jusqu'à 20 atomes de carbone, les vinylaromatiques jusqu'à 20 atomes de carbone,
• les éthers vinyliques et les éthers allyliques d'alcools contenant 1 à 12 atomes de carbone, les poly(oxyalkylène)allyléthers de méthyle et les poly(oxyalkylène)vinyléthers de méthyle.

9. Procédé permettant d'améliorer les capacités d'écoulement de substances pulvérulentes, **caractérisé en ce que** l'on ajoute à une substance pulvérulente un polymère de formule (XIV) selon l'une quelconque des revendications 1 à 8.

10. Procédé selon la revendication 9, **caractérisé en ce que** la substance pulvérulente est un liant minéral.

11. Mélange contenant des polymères de formule (XIV) selon l'une quelconque des revendications 1 à 8 et des substances pulvérulentes.

12. Mélange de liants, qui contient des polymères de formule (XIV) selon l'une quelconque des revendications 1 à 8 et des liants hydrauliques.

13. Matériau de construction à base d'un liant hydraulique, qui contient un polymère de formule (XIV) selon l'une quelconque des revendications 1 à 8.
